# EUROPEAN PATENT APPLICATION

(11) **EP 4 564 085 A1**
(43) Date of publication of application: **04.06.2025**
(21) Application number: 23921731.8
(22) Date of filing: 15.02.2023
(51) Int. Cl.: G02F 1/1362

(54) **ARRAY SUBSTRATE AND DISPLAY DEVICE**

(71) Applicant: Boe Technology Group Co., Ltd., Beijing 100015 (CN); Hefei Boe Display Technology Co., Ltd., Hefei, Anhui 230012 (CN)
(72) Inventor: CHENG, Min, Beijing 100176 (CN); LIU, Jiaqing, Beijing 100176 (CN); DAI, Ke, Beijing 100176 (CN); YANG, Haipeng, Beijing 100176 (CN); GUO, Lei, Beijing 100176 (CN); ZHOU, Maoxiu, Beijing 100176 (CN); ZHANG, Chunxu, Beijing 100176 (CN); JIANG, Xiaoting, Beijing 100176 (CN)
(74) Representative: Cohausz & Florack
(86) International application number: PCT/CN2023/076086
(87) International publication number: WO 2024/168566

(57) **Abstract**

An array substrate and a display device of the present disclosure comprise: a base substrate having a display area; pixel electrode groups arranged in an array in the display area, each pixel electrode group comprising a first pixel electrode and a second pixel electrode, and the first pixel electrodes and the second pixel electrodes being alternately arranged in the row direction and the column direction respectively; data lines passing through column gaps between the pixel electrode groups, the first pixel electrode being coupled to an adjacent data line, and the second pixel electrode being connected to a data line coupled to the first pixel electrode in the same pixel electrode group; a connection structure connecting the second pixel electrode and the data line in a row gap between the pixel electrode groups; a common electrode line passing through the column gap between the pixel electrode groups, a first capacitor being provided between the common electrode line and the connection structure; and a compensation structure in a row gap between the pixel electrode groups and coupled to the first pixel electrode, a second capacitor being provided between the compensation structure and the common electrode line, and the second capacitor comprising a three-layer conductive layer structure overlapping each other on the base substrate.

## Description

### Technical Field

The disclosure relates to the technical field of display, in particular to an array substrate and a display device.

### Background

Featuring small size, low power consumption, high picture quality, no radiation and portability, a thin film transistor liquid crystal display (TFT-LCD) has been developed rapidly in recent years, and has gradually replaced a traditional cathode ray tube display (CRT) and occupied a dominant position in the current market in flat panel displays. Currently, the TFT-LCD has been widely used in a variety of large, medium and small sized products, almost covering the major electronic products, such as liquid crystal televisions, high definition digital televisions, computers (desktop computers and laptop computers), cell phones, tablet computers, navigators, in-vehicle displays, projection displays, cameras, digital cameras, electronic watches, calculators, electronic instruments, meters, public displays, virtual displays, etc., in information society.

### Summary

The disclosure provides an array substrate and a display device. Specific solutions are as follows.

In an aspect, the disclosure provides an array substrate including: a base substrate, where the base substrate includes a display region; a plurality of pixel electrode groups arranged in an array in the display region, where each of the pixel electrode groups includes a first pixel electrode and a second pixel electrode, and first pixel electrodes and second pixel electrodes are alternately arranged in a row direction and a column direction separately; a plurality of data lines passing through column gaps between the pixel electrode groups, where the first pixel electrode is coupled to a data line adjacent to the first pixel electrode, and the second pixel electrode is connected to the data line coupled to the first pixel electrode that is in the same one pixel electrode group as the second pixel electrode; a plurality of connection structures located at row gaps between the pixel electrode groups, where the connection structures are connected between the second pixel electrodes and the data lines; a plurality of common electrode lines passing through column gaps within the pixel electrode groups each, where first capacitors are provided between a common electrode line and the connection structures; and a plurality of compensation structures located at the row gaps between the pixel electrode groups, where the compensation structures are coupled to the first pixel electrodes, second capacitors are provided between the compensation structures and a common electrode line, and the second capacitor includes a structure of three conductive layers overlaid with each other in a direction perpendicular to the base substrate.

In some embodiments, the array substrate provided in the embodiments of the disclosure further includes a plurality of gate lines on two sides of each row of the pixel electrode groups, where the structure of three conductive layers include a first conductive structure arranged in the same layer as the pixel electrode groups, a second conductive structure arranged in the same layer as the gate lines, and a third conductive structure arranged in the same layer as the data lines.

In some embodiments, as for the array substrate provided in the embodiments of the disclosure, the common electrode lines include convex portions crossing the column direction, and each of the convex portions and each of the compensation structures form a second capacitor.

In some embodiments, as for the array substrate provided in the embodiments of the disclosure, the common electrode lines include main portions extending in the column direction, and each of the main portions and each of the compensation structures form a second capacitor.

In some embodiments, as for the array substrate provided in the embodiments of the disclosure, the common electrode lines and the data lines are arranged in the same layer, the array substrate further includes a common electrode overlaid with the pixel electrode groups in orthographic projection, and the second capacitors further include fourth conductive portions arranged in the same layer as the common electrodes.

In some embodiments, the array substrate provided in the embodiments of the disclosure further includes a plurality of transistors located in the row gaps between the pixel electrode groups, where the second capacitors further include semiconductor structures arranged in the same layer as active layers of the transistors.

In some embodiments, as for the array substrate provided in the embodiments of the disclosure, at least one layer of the connection structures and at least one layer of the compensation structures are arranged in the same layer.

In some embodiments, as for the array substrate provided in the embodiments of the disclosure, the data lines include widened portions, and at least some of the widened portion support spacers; and the array substrate further includes a plurality of transistors located in the row gaps between the pixel electrode groups, and a plurality of gate lines located on two sides of each row of the pixel electrode groups, where gates of the transistors are separated at two sides of the data lines, local portions of the gate lines are reused as the gates of the transistors, first electrodes of the transistors are coupled to the widened portions, and orthographic projections of the first electrodes of the transistors on the base substrate are overlaid with orthographic projections of the gates of the transistors on the base substrate.

In some embodiments, the array substrate provided in the embodiments of the disclosure further includes a plurality of first wires passing through the column gaps within the pixel electrode groups, where the first wires are arranged in the same layer as the active layers of the transistors and make contact with the common electrode lines in a stacked manner, orthographic projections of the common electrode lines on the base substrate are located in orthographic projections of the first wires on the base substrate, and a distance between an orthographic projection of a first wire on the base substrate and an orthographic projection of a first pixel electrode adjacent to the first wire on the base substrate and a distance between the orthographic projection of the first wire on the base substrate and an orthographic projection of a second pixel electrode adjacent to the first wire on the base substrate are both greater than or equal to 1 µm and less than or equal to 5 µm.

In some embodiments, the array substrate provided in the embodiments of the disclosure further includes a plurality of gate lines passing through the row gaps between the pixel electrode groups, and common electrodes located in regions defined by the gate lines and the data lines, where each of the common electrodes includes a plurality of slits, and orthographic projections of the slits on the base substrate are overlaid with orthographic projections of the common electrode lines on the base substrate, orthographic projections of the first pixel electrodes on the base substrate, and orthographic projections of the second pixel electrodes on the base substrate each.

In some embodiments, the array substrate provided in the embodiments of the disclosure further includes a plurality of second wires passing through the column gaps within the pixel electrode groups, where the second wires are integrated with the common electrodes, the second wires are coupled to the common electrode lines, and an orthographic projection of a common electrode line on the base substrate is unilaterally beyond an orthographic projection of a second wire on the base substrate by a distance greater than or equal to 0.5 µm and less than or equal to 2 µm.

In some embodiments, the array substrate provided in the embodiments of the disclosure further includes a plurality of jumper lines located at the column gaps between the pixel electrode groups, where each of the jumper lines is integrated with common electrodes that are in the same row and are adjacent to the jumper line.

In some embodiments, as for the array substrate provided in the embodiments of the disclosure, the base substrate further includes a frame region surrounding the display region, where the frame region includes a first frame region and a second frame region that are opposite each other, and a third frame region and a fourth frame region that are opposite each other, the first frame region includes a bonding region configured to bond a circuit board, the third frame region is connected to the first frame region and the second frame region, and the fourth frame region is connected to the first frame region and the second frame region; and the array substrate further includes a gate drive circuit located in the third frame region and/or the fourth frame region, a plurality of gate lines located on two sides of each row of the pixel electrode groups, and a gate drive signal line connecting the circuit board to the gate drive circuit, where the gate drive signal line and the gate lines are arranged in the same layer.

In some embodiments, as for the array substrate provided in the embodiments of the disclosure, the gate drive signal line includes a low level power line.

In some embodiments, the array substrate provided in the embodiments of the disclosure further includes a common electrode bus that at least partially surrounds the display region, is in the frame region and is arranged in the same layer as the gate lines, the common electrodes overlaid with the pixel electrode groups in orthographic projection, an adapter structure arranged in the same layer as the common electrodes, a conductive structure integrated with a gate line, and an insulating layer located between a layer where the gate lines are located and a layer where the common electrodes is located; where the common electrode bus includes a main line located in the third frame region and/or the fourth frame region, and a convex block located on a side of the main line facing the display region, the convex block is correspondingly coupled to a common electrode through a first via hole penetrating the insulating layer, the adapter structure is coupled to a gate signal output end of the gate drive circuit through a second via hole penetrating the insulating layer, and coupled to the conductive structure through a third via hole penetrating the insulating layer, and the first via hole is arranged substantially flush with the second via hole and/or the third via hole in the column direction.

In some embodiments, as for the array substrate provided in the embodiments of the disclosure, two gate lines are arranged in a row gap of two adjacent rows of the pixel electrode groups, the common electrode bus further includes a first branch line located in the first frame region, a distance between the first branch line and a gate line adjacent to the first branch line is substantially equal to a distance between the two gate lines in the row gap of the two adjacent rows of the pixel electrode groups, and the first branch line has a structure substantially the same as that of the gate lines.

In some embodiments, as for the array substrate provided in the embodiments of the disclosure, the second branch line is on a side of the first branch line away from the display region and is spaced from the first branch line, the second branch line has a first distance from a gate line nearest to the second branch line, a sum of a width of the row gap of each row of the pixel electrode groups in the column direction and a length of each row of the pixel electrode groups in the column direction is a second distance, and the first distance is 1/10 to 1/2 of the second distance.

In some embodiments, the array substrate provided in the embodiments of the disclosure further includes a dummy common electrode located between the first branch line and the second branch line, where the dummy common electrode is arranged in the same layer as the common electrode and electrically connected to the common electrode bus.

In the other aspect, the embodiments of the disclosure provide a display device. The display device includes an array substrate and an opposite substrate that are arranged opposite each other, and a liquid crystal layer located between the array substrate and the opposite substrate, where the array substrate is the array substrate provided in the embodiments of the disclosure.

In some embodiments, as for the display device provided in the embodiments of the disclosure, the array substrate includes a plurality of gate lines on two sides of each row of pixel electrode groups, and orthographic projections of data lines on the base substrate have overlaying regions with orthographic projections of the gate lines on the base substrate; and the opposite substrate includes a plurality of spacers, orthographic projections of the spacers on the base substrate are located within orthographic projections of widened portions on the base substrate, and a distance between the orthographic projections of the spacers on the base substrate and the overlaying regions is greater than or equal to 10 µm and less than or equal to 20 µm.

In some embodiments, as for the display device provided in the embodiments of the disclosure, the opposite substrate further includes a plurality of color resists, at least some of the color resists include first island structures corresponding to the widened portions, and each of the first island structures is spaced from a color resist adjacent to the first island structure.

In some embodiments, as for the display device provided in the embodiments of the disclosure, at least some of the color resists include second island structures overlaid with common electrode lines in orthographic projection, and each of the second island structures is spaced from a color resist adjacent to the second island structure.

In some embodiments, as for the display device provided in the embodiments of the disclosure, he color resists that are adjacent to each other are overlaid with each other in a region excluding the first island structures and the second island structures.

### Brief Description of Figures

Fig. 1 is a schematic diagram of pixel arrangement of a dual gate product in the related art.
Fig. 2 is a schematic diagram of an array substrate according to an embodiment of the disclosure.
Fig. 3 is a schematic enlarged structural diagram of a region Z₁ of Fig. 2.
Fig. 4 is a schematic enlarged structural diagram of a region Z₂ of Fig. 3.
Fig. 5 is a schematic enlarged structural diagram of a region Z₃ of Fig. 4.
Fig. 6 is a schematic diagram of a second capacitor according to an embodiment of the disclosure.
Fig. 7 is a schematic structural diagram of a layer where pixel electrodes are located in Fig. 3.
Fig. 8 is a schematic structural diagram of a layer where gate lines are located in Fig. 3.
Fig. 9 is a schematic structural diagram of a layer where an active layer is located in Fig. 3.
Fig. 10 is a schematic structural diagram of a layer where data lines are located in Fig. 3.
Fig. 11 is a schematic structural diagram of an insulating layer in Fig. 3.
Fig. 12 is a schematic structural diagram of a layer where a common electrode is located in Fig. 3.
Fig. 13 is a schematic enlarged structural diagram of a region Z₄ of Fig. 3.
Fig. 14 is a schematic enlarged structural diagram of a region Z₅ of Fig. 3.
Fig. 15 is a schematic enlarged structural diagram of a layer where data lines are located and a layer where a common electrode is located in a region Z₆ of Fig. 3.
Fig. 16 is a schematic enlarged structural diagram of a region Z₇ of Fig. 2.
Fig. 17 is a schematic structural diagram of a layer where gate lines are located in Fig. 16.
Fig. 18 is a schematic structural diagram of a layer where data lines are located in Fig. 16.
Fig. 19 is a schematic structural diagram of an insulating layer in Fig. 16.
Fig. 20 is a schematic structural diagram of a layer where a common electrode is located in Fig. 16.
Fig. 21 is a schematic structural diagram of a display device according to an embodiment of the disclosure.
Fig. 22 is a schematic structural diagram of a color resist provided in an embodiment of the disclosure.
Fig. 23 is another schematic structural diagram of a color resist provided in an embodiment of the disclosure.
Fig. 24 is yet another schematic structural diagram of a color resist provided in an embodiment of the disclosure.

### Detailed Description

In order to make the objectives, technical solutions, and advantages in the embodiments of the disclosure clearer, the technical solutions in the embodiments of the disclosure will be clearly and completely described below in conjunction with the accompanying drawings in the embodiments of the disclosure. It should be noted that in order to make the objectives, technical solutions, and advantages in the embodiments of the disclosure clearer, the technical solutions in the embodiments of the disclosure will be clearly and completely described below in conjunction with the accompanying drawings in the embodiments of the disclosure. It should be noted that in the drawings, the thicknesses of layers, films, panels, regions, etc. are magnified for clarity. Illustrative implementations are described in this disclosure with reference to cross sectional views that are schematic diagrams of idealized implementations. In this way, deviations from a shape of a drawing will be expected as a result of, for example, manufacturing techniques and/or tolerances. Thus, the implementations described in the disclosure should not be construed as being limited to the specific shapes of regions as shown in the disclosure, but include deviations in shapes caused by, for example, manufacturing. For example, areas illustrated or described as flat may typically have rough and/or non-linear features. Sharp corners illustrated may be rounded, etc. Thus, the regions shown in the figures are illustrative in nature, and their size and shape are not intended to be precise shapes of the illustrated regions, do not reflect true scales, and are merely intended to illustrate the disclosure. Moreover, the same or similar reference numerals denote the same or similar elements or elements having the same or similar functions throughout. In order to keep the following descriptions of embodiments of the disclosure clear and concise, the disclosure omits detailed descriptions of known functions and known components.

Unless otherwise defined, technical or scientific terms used herein should have ordinary meanings as understood by those of ordinary skill in the art to which the disclosure belongs. "First", "second" and similar words used in the specification and claims of the disclosure do not mean any order, quantity or importance, but are only used for distinguishing different components. "Comprise", "include" and similar words are intended to mean that an element or item in front of the word encompasses elements or items that are listed behind the word and their equivalents, but do not exclude other elements or items. "Connection", "connected" and similar words are not limited to a physical or mechanical connection, but can include a direct or indirect electrical connection. "Inner", "outer", "upper", "lower", etc. are merely used to indicate a relative positional relation, and when an absolute position of the described object is changed, the relative positional relation can also be changed accordingly.

In the description below, when an element or layer is described as being "on" or "connected to" another element or layer, it can be directly on or connected to another element or layer, or an intervening element or layer can be present. When an element or layer is described as being "arranged on" "one side" of another element or layer, it can be directly on or connected to another element or layer, or an intervening element or layer can be present. However, when an element or layer is described as being "directly on" or "directly connected to" another element or layer, an intervening element or layer is absent. The term "and/or" includes any and all combinations of one or more of the associated listed items.

At present, the competition in the display field is increasingly fierce, and the cost reduction thought is carried out throughout the display field. Compared with a conventional solution of using one data line to drive one column of sub-pixels, a dual gate product uses one data line to drive a plurality of columns of sub-pixels simultaneously, thereby reducing the number of data lines, and reducing the total number of drive chips (e.g., integrated circuits (ICs)). Accordingly, the material cost is greatly reduced. The dual gate product is especially suitable for medium and large size products such as vehicle display screens and televisions.

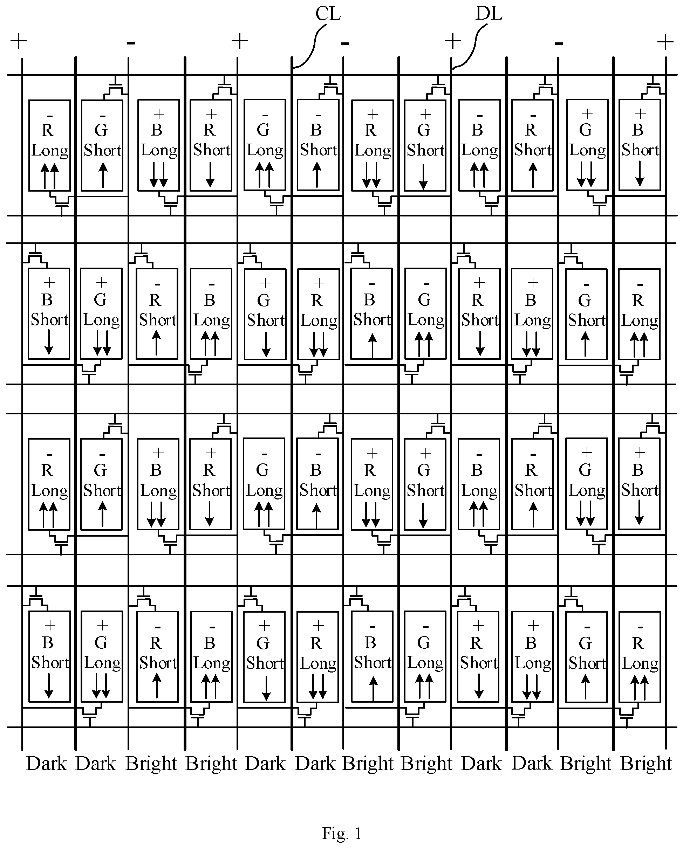

Fig. 1 is a schematic diagram of pixel arrangement of a dual gate product in the related art. As can be seen from Fig. 1, the dual gate product uses one data line DL to control shorter connection pixels and longer connection pixels that are adjacent to each other in the same rows. In this case, since the shorter connection pixels do not cross a common electrode line CL, and the longer connection pixels need to cross the common electrode line CL, the longer connection pixels generate an extra capacitor. In Fig. 1, "long" indicates the longer connection pixels, "short" indicates the shorter connection pixels, "↑" indicates brighter, "↑↑" indicates very bright, "↓" indicates darker, and "↓↓" indicates very dark. The extra capacitor will cause periodic vertical stripes of bright-bright-dark-dark arrangement to be clearly observed for a single frame (positive frame "+" or negative frame "-") of display picture when pixels are driven in a column inversion mode. After polarity of the frame is reversed, the bright and dark are reversed, the vertical stripes become dark-dark-bright-bright, such that a uniform bright and dark is achieved in time. However, when a user shakes the head to watch the screen, losing a positive frame or a negative frame, the bright and dark cannot be balanced in time, and a defect of stripes due to shaking the head is generated.

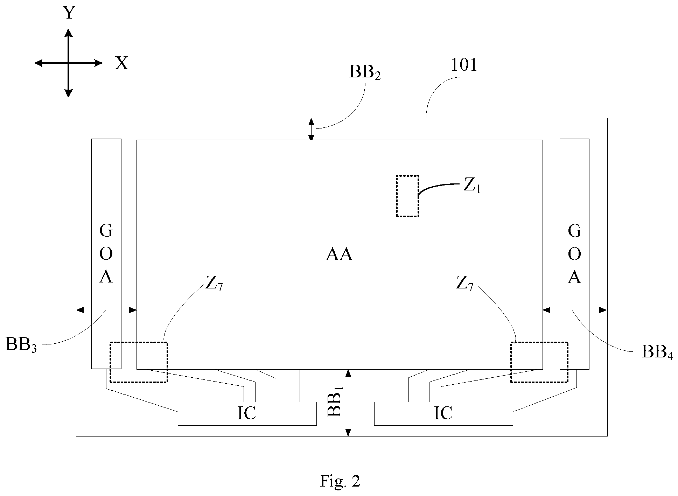

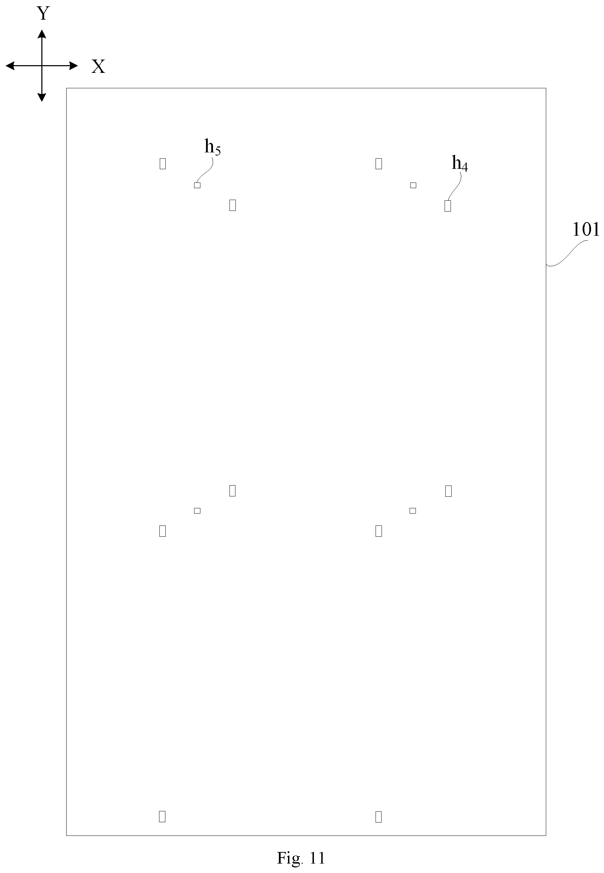

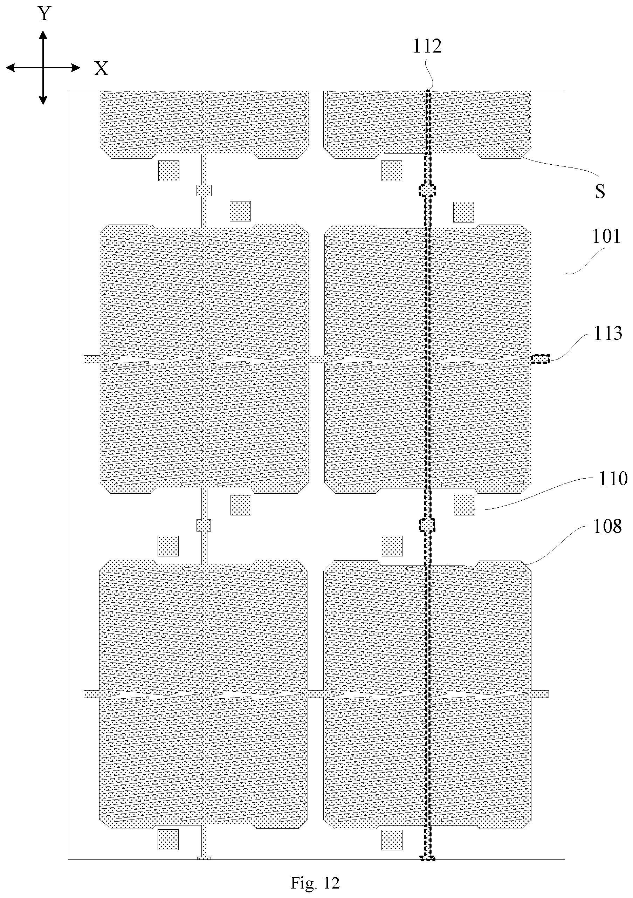

In order to improve the above technical problems existing in the related art, the disclosure provides an array substrate, as shown in Figs. 2-12. The array substrate includes: a base substrate 101, a plurality of pixel electrode groups 102, a plurality of data lines 103, a plurality of connection structures 104, a plurality of common electrode lines 105 and a plurality of compensation structures 106.

The base substrate 101 includes a display region AA; and optionally, the base substrate 101 is a substrate, a material of which is e.g., glass, quartz, plastic, etc., allowing visible light transmission.

The plurality of pixel electrode groups 102 are arranged in an array in the display region AA, where each of the pixel electrode groups 102 includes a first pixel electrode P₁ and a second pixel electrodes P₂, and the first pixel electrodes P₁ and the second pixel electrodes P₂ are alternately arranged in a row direction X and a column direction separately Y; and optionally, the first pixel electrodes P₁ and the second pixel electrodes P₂ are made of the same material, e.g., a transparent conductive material such as indium tin oxide (ITO), indium zinc oxide (IZO), etc.

The plurality of data lines 103 pass through column gaps between the pixel electrode groups 102, where the first pixel electrode P₁ is coupled to a data lines 103 adjacent to the first pixel electrode P₁, and the second pixel electrode P₂ is connected to the data line 103 coupled to the first pixel electrode P₁ that is in the same one pixel electrode group 102 as the second pixel electrode P₂. Optionally, a material of the data lines 103 may include molybdenum (Mo), aluminum (Al), titanium (Ti), chromium (Cr), nickel (Ni), etc., and the data lines 103 may have a single-layer structure or a laminated-layer structure, for example, the data lines 103 may have a laminated-layer structure composed of a titanium metal layer/an aluminum metal layer/a titanium metal layer.

The plurality of connection structures 104 are located at row gaps between the pixel electrode groups 102, where the connection structures 104 are connected between the second pixel electrodes P₂ and the data lines 103.

The plurality of common electrode lines 105 pass through column gaps within the pixel electrode groups 102 each, where first capacitors are provided between a common electrode line 105 and the connection structures 104. Optionally, the common electrode lines 105 and the data lines 103 are arranged in the same layer and made of the same material; and it should be noted that a capacitor structure in the solution refers to a structure including two conductive layers and an insulating layer(s) arranged between the conductive layers.

The plurality of compensation structures 106 are located at the row gaps between the pixel electrode groups 102, where the compensation structures 106 are coupled to the first pixel electrodes P₁, second capacitors are provided between the compensation structures 106 and a common electrode line 105, and the second capacitor includes a structure of three conductive layers C overlaid with each other in a direction perpendicular to the base substrate 101, such that the second capacitor and the first capacitor are the same substantially (i.e., the same, or within 10% error due to manufacture, measurement, etc.).

In the array substrate provided in the embodiment of the disclosure, the compensation structures 106 coupled to the first pixel electrodes P1 are additionally provided, and the second capacitors formed by the compensation structures 106 and the common electrode lines 105 are arranged to include the structure of three conductive layers C, such that the second capacitors and the first capacitors (i.e., the additional capacitors of the second pixel electrodes P₂ caused by overlaying of the connection structures 104 and the common electrode lines 105) are substantially the same. Voltage differences between the first pixel electrodes P₁ and the second pixel electrodes P₂ caused by the first capacitors can be reduced, and brightness uniformity of a pixel region where the first pixel electrodes P₁ and the second pixel electrodes P₂ are located can be improved, such that a defect of stripes due to shaking the head caused by uneven brightness is effectively improved.

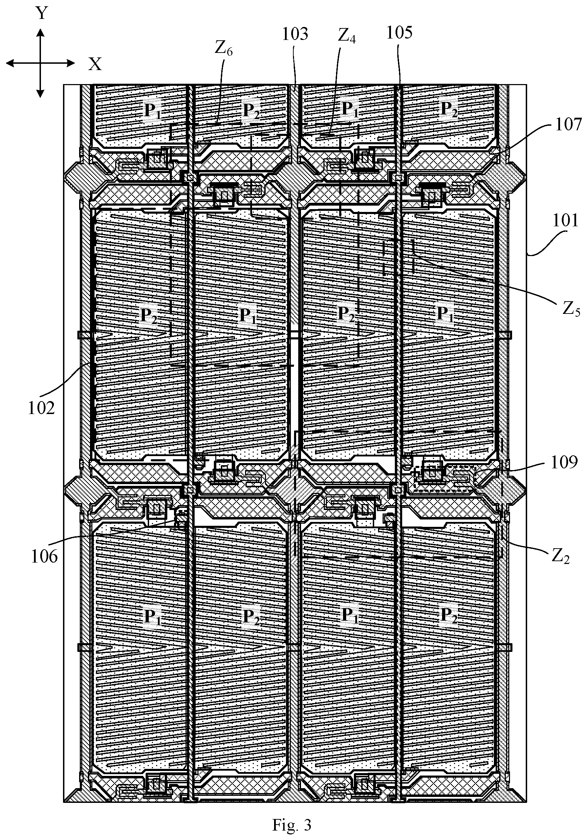

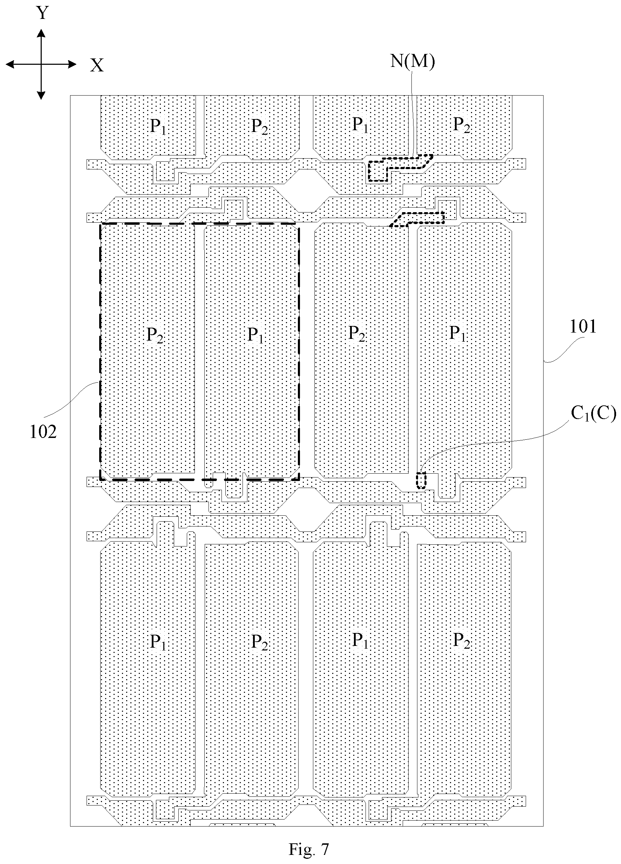

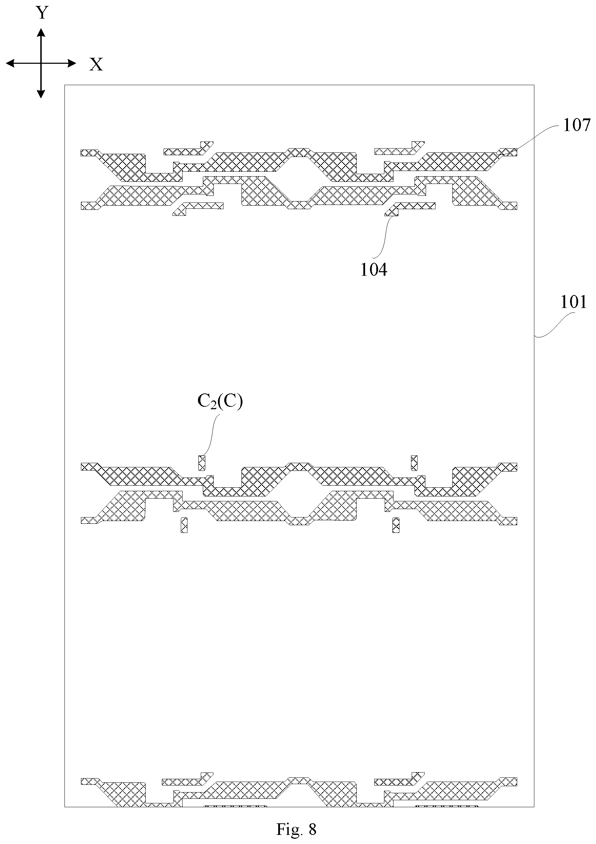

In some embodiments, as shown in Fig. 3, the array substrate provided in the embodiment of the disclosure may further include a plurality of gate lines 107 located on two sides of each row of the pixel electrode groups 102. Each first pixel electrode P₁ of each row of the pixel electrode groups 102 is correspondingly connected to a gate line 107 on a side of the row of the pixel electrode groups 102, and each second pixel electrode P₂ of each row of the pixel electrode groups 102 is correspondingly connected to a gate line 107 on the other side of the row of the pixel electrode groups 102. Accordingly, two gate lines 107 are provided in a row gap between pixel electrode groups 102 that are adjacent to each other, forming a dual gate structure. Optionally, a material of the gate lines 107 may include metal such as molybdenum (Mo), aluminum (Al), titanium (Ti), chromium (Cr), nickel (Ni), etc. The gate lines 107 may have a single-layer structure or a laminated-layer structure. For example, the gate lines 107 may be a single-layer structure composed of a copper metal layer. In some embodiments, a mask may be used to manufacture patterns of a layer where the pixel electrode groups 102 are located and a layer where the gate lines 107 are located. In terms of process, one mask is used to manufacture the layer where the pixel electrode groups 102 are located, then this one mask is used to manufacture the layer where the gate lines 107 are located, and then a gate insulating layer, such as a silicon nitride layer, is manufactured. In this case, as shown in Figs. 7 and 8, patterns similar to the gate lines 107 and the connection structures 104 exist in the layer where the pixel electrode groups 102 are located. With reference to Figs. 7 and 8, a portion M, that is electrically connected to a second pixel electrode P₂, of an electrode of the transistor 109 includes a long connection portion N located in the same layer as the pixel electrode groups 102 and a connection structure 104 located in the same layer as the gate lines 107. The long connection portion makes contact with the connection structure.

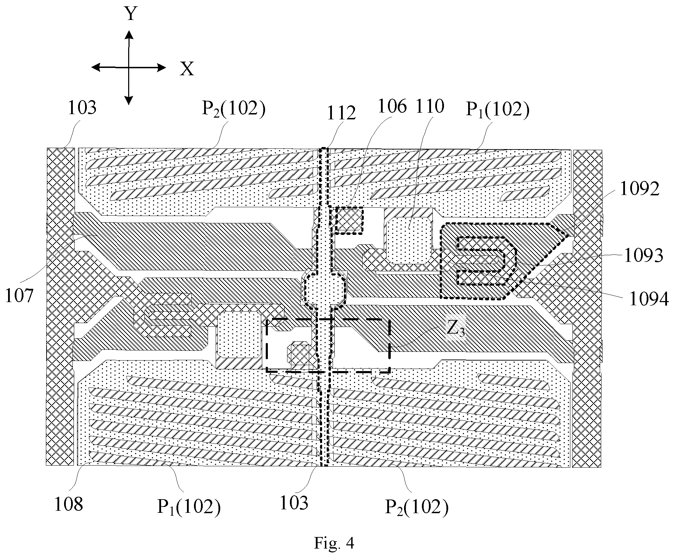

In some embodiments, as shown in Figs. 4-8 and 10, the structure of three conductive layers C include a first conductive structure C₁ arranged in the same layer as the pixel electrode groups 102 and made of the same material as the pixel electrode groups, a second conductive structure C₂ arranged in the same layer as the gate lines 107 and made of the same material as the gate lines, and a third conductive structure C₃ arranged in the same layer as the data lines 103 and made of the same material as the data lines. The first conductive structure C₁ makes contact with the second conductive structure C₂ in a stacked manner. The third conductive structure C₃ is stacked on a side of the second conductive structure C₂ away from the first conductive structure C₁. The third conductive structure C₃ is insulated from the second conductive structure C₂. In this case, the structure of three conductive layers C can be used as a repair point. Compared with a two-layer structure, the three-layer structure can more easily implement repair because a metal material is provided in the same layer as the gate lines. For example, welding repair is used, that is, when problems such as bright spots occur in pixels, the abnormal bright spots can be blackened by welding the third conductive structure C₃ and the second conductive structure C₂ together.

It should be noted that in the disclosure, the "same layer" refers to a layer structure in which a film layer for making a specific pattern is formed by using the same one film-forming process and then formed through a single patterning process by using the same one mask. That is, one single patterning process corresponds to one mask (also called photomask). According to the particular pattern, a single patterning process may include repeated exposure, development, or etching processes, the particular pattern in the formed layer structure may be continuous or not, and the particular patterns may be located at the same height or have the same thickness, or may be located at different heights or have different thicknesses.

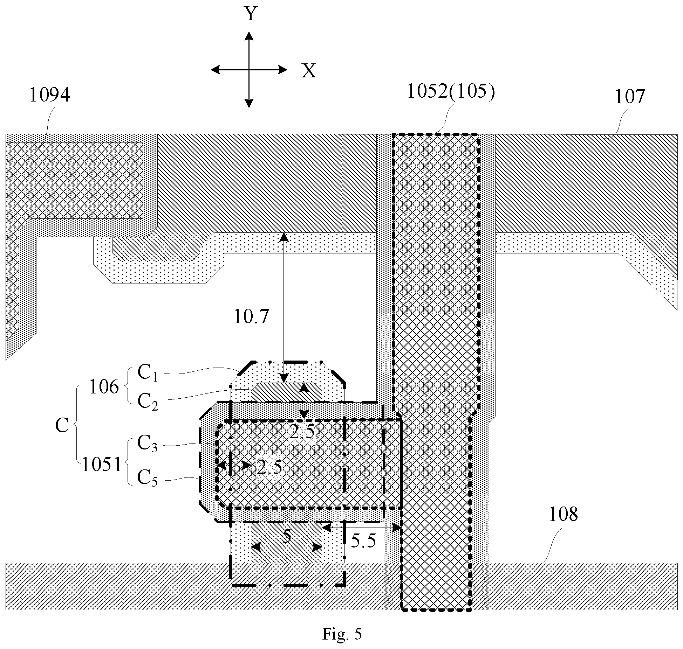

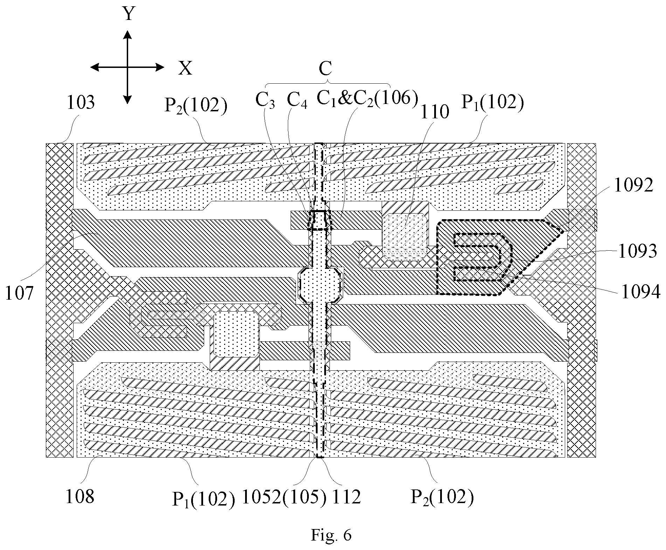

In some embodiments, as for the array substrate provided in the embodiments of the disclosure, capacitor compensation for the first pixel electrodes P₁ can be achieved by the following two solutions. One solution is shown in Fig. 5, each of the common electrode lines 105 includes convex portions 1051 crossing the column direction Y, and each of the convex portions 1051 and each of the compensation structures 106 form the second capacitor. The other solution is shown in Fig. 6, each of the common electrode lines 105 includes main portions 1052 extending in the column direction Y, and each of the main portions 1052 and each of the compensation structures 106 form the second capacitor. With further reference to Fig. 6, the array substrate may further include common electrodes 108 overlaid with the pixel electrode groups 102 in orthographic projection, and the second capacitor may further include a fourth conductive portion C₄ arranged in the same layer as the common electrode 108 and made of the same material as the common electrode. The fourth conductive portion C4 is coupled to the common electrode line 105. Optionally, the material of the common electrode 108 includes a transparent conductive material such as indium tin oxide (ITO), indium zinc oxide (IZO), etc.

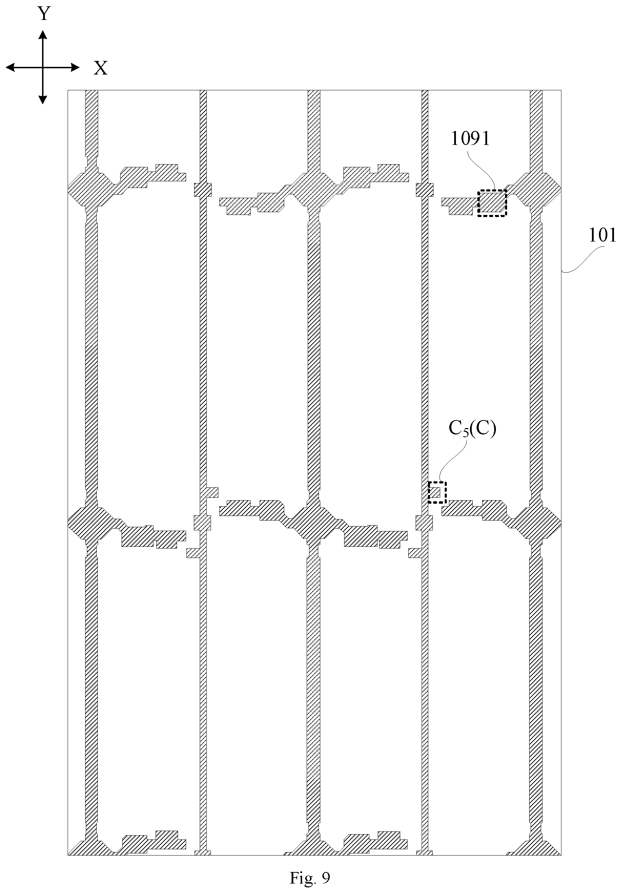

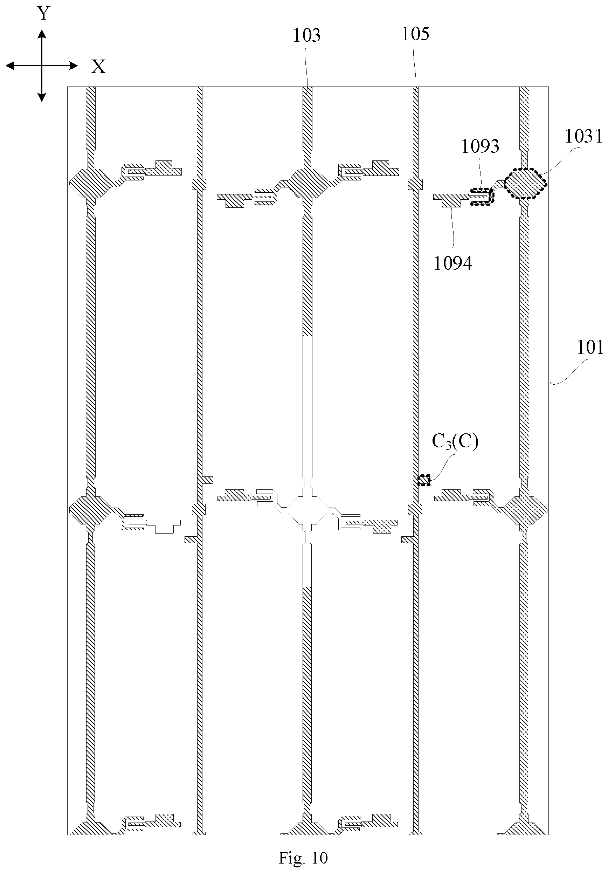

In some embodiments, as shown in Figs. 3, 5, 9, and 10, the array substrate provided in the embodiment of the disclosure may further include a plurality of transistors 109 located at row gaps between the pixel electrode groups 102. The transistors 109 coupled to the same one data line 103 are located on left and right sides of the data line 103. The second capacitor may further include a semiconductor structure C₅ arranged in the same layer as the active layer(s) 1091 of the transistor(s) 109. Optionally, the semiconductor structure C₅ makes contact with the third conductive structure C₃ in a stacked manner, such that patterns of a layer (i.e., the active layer 1091) where the semiconductor structure C₅ is located and a layer where the third conductive structure C₃ is located (i.e., the layer where the data lines 103 are located) can be manufactured by using one mask. Compared with a solution of using two masks to respectively manufacture the patterns of the layer where the semiconductor structure C₅ is located and the layer where the third conductive structure C₃ is located, this solution can save one mask, thereby reducing the cost and improving the production efficiency. Moreover, in the case that one mask is used to manufacture patterns of the layer where the semiconductor structure C₅ is located (i.e., the active layer 1091) and the layer where the third conductive structure C₃ is located (i.e., the layer where the data lines 103 are located), as shown in Figs. 9 and 10, patterns similar to the data line 103, the common electrode line 111, and the first electrode 1093 and the second electrode 1094 of the transistor 109 exist in the active layer 1091. As for the process, a semiconductor layer is coated first, a data line layer is coated, the data line layer is patterned to form the data lines 103 and the semiconductor layer is patterned to form the active layers 1091 separately by using one mask, an insulating layer PVX, such as a silicon nitride layer, is coated, a common electrode layer is coated, and the common electrode layer is patterned to form the common electrodes 108.

In some embodiments, as for the array substrate provided in the embodiments of the disclosure, as shown in Figs. 7 and 8, at least one layer of the connection structures 104 and at least one layer of the compensation structures 106 are arranged in the same layer and made of the same material. For example, the connection structures 104 and the compensation structures 106 are arranged at both the layer where the pixel electrode groups 102 are located and the layer where the gate lines 107 are located.

In some embodiments, as for the array substrate provided in the embodiments of the disclosure, as shown in Figs. 3, 8, and 10, the data lines 103 include widened portions 1031, at least some of the widened portions 1031 are used for supporting spacers (PS). The gate electrodes 1092 of the transistors 109 are separated on two sides of the data line 103. local portions of the gate lines 107 are reused as the gate electrodes 1092 of the transistors 109. The first electrodes 1093 of the transistors 109 are coupled to the widened portions 1031. Orthographic projections of the first electrodes 1093 of the transistors 109 on the base substrate 101 are overlaid with orthographic projections of the gate electrodes 1092 of the transistors 109 on the base substrate 101, and then the first electrodes 1093 and the gate electrodes 1092 of the transistors 109 form double-layer metal. The double-layer metal acts as a PS barrier to prevent scratches on a polyemid (PI) caused by sliding of the PSs when a product is deformed by force.

With reference to Figs. 3, 8-10, it can be seen that transistors 109 connected to the same one data line 103 are located on left and right sides of the data line, which may lead to different overlaying areas of the gate lines 107 and the second electrodes 1094 when a process shift occurs, vertical stripe defects are generated on left and right rows of the data line 103. In order to improve the vertical stripe defects, the second electrodes 1094 of the transistors 109 may be overlaid with the gate lines 107 on the left and right sides of the second electrodes, such that it is guaranteed that the overlaying areas are the same in the case of the process shift between the layer where the gate lines 107 are located and the layer where the data lines 103 are located.

In some embodiments, the transistors 109 may be P-type transistors or N-type transistors. The transistors 109 may be bottom-gate transistors, top-gate transistors, or double-gate transistors, which are not limited herein. In the disclosure, the first electrodes 1093 of the transistors 109 may be sources, and the second electrodes 1094 may be drains. Alternatively, the first electrodes 1093 of the transistors 109 may be drains, and the second electrodes 1094 may be sources, which are not limited herein. A material of the active layers 1091 of the transistors 109 may be amorphous silicon (a-Si), polycrystalline silicon, oxide (for example, indium gallium zinc oxide (IGZO)), etc. Optionally, a gate insulating layer (GI) may be arranged between a layer where the gate electrodes 1092 of the transistors 109 are located and the active layers 1091 of the transistors. A passivation layer (PVX) may be arranged between a layer where the first electrodes 1093 and the second electrodes 1094 of the transistors 109 are located and a layer where the common electrodes 108 are located. Both the gate insulating layer and the passivation layer may be made of at least one of inorganic insulating materials such as silicon oxide, silicon nitride, silicon oxynitride, etc. In some embodiments, as shown in Figs. 7-12, adapter electrodes 110 arranged in the same layer as the common electrodes 108 and made of the same material as the common electrodes may be arranged. Electrical connection between the first pixel electrodes P₁ or the second pixel electrodes P₂ and the second electrodes 1094 may be achieved through fourth via holes h₄. Specifically, the fourth via hole h₄ penetrates the passivation layer in a region connecting the second electrode 1094, and penetrates the passivation layer and the gate insulating layer simultaneously in a region connecting the first pixel electrode P1 or the second pixel electrode P2.

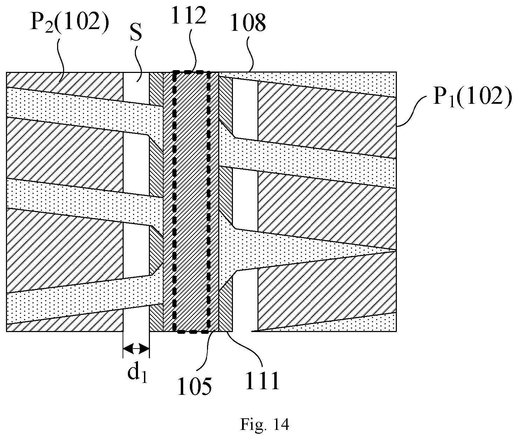

In some embodiments, as shown in Figs. 3, 7, 9, 10 and 14, the array substrate provided in the embodiments of the disclosure further includes a plurality of first wires 111 penetrating the column gaps within the pixel electrode groups 102. The first wires 111 are arranged in the same layer as the active layers 1091 of the transistors 109 and made of the same material as the active layers and make contact with the common electrode lines 105 in a stacked manner. In some embodiments, one mask can be used to manufacture patterns of the layer where the first wires 111 are located and the layer where the common electrode lines 105 are located. Due to exposure diffraction, orthographic projections of the finally manufactured common electrode lines 105 on the base substrate 101 are located within orthographic projections of the first wires 111 on the base substrate 101. Considering that the first wires 111 arranged in the same layer as the active layers 1091 and made of the same material as the active layers may be conductive when illuminated by backlight, in a case that the first wires 111 are overlaid with the first pixel electrodes P₁ and the second pixel electrodes P₂ on two sides of the first wires, storage capacitors (Cst) formed by overlaying of the first wires 111 with the first pixel electrodes P₁ and the second pixel electrodes P₂ may be uncontrollable, resulting in a waterfall defect. In order to relieve the waterfall defect, as shown in Fig. 14, the disclosure needs to guarantee that the orthographic projections of the first wires 111 on the base substrate 101, the orthographic projections of the adjacent first pixel electrodes P₁ on the base substrate 101, and the orthographic projections of the adjacent second pixel electrodes P₂ on the base substrate 101 are not overlaid with each other. Moreover, in order to make the pixel aperture ratio larger, the disclosure needs to guarantee that the distance d₁ between the first wire 111 and the first pixel electrode P₁, and the distance d₁ between the first wire 111 and the second pixel electrode P₂ are as small as possible, for example, the distance d₁ satisfies alignment accuracy of an apparatus. The current alignment accuracy of the apparatus is 1 µm to 5 µm. The distance d₁ between the first wire 111 and the first pixel electrode P₁, and the distance d₁ between the first wire 111 and the second pixel electrodes P₂ may be set to be greater than or equal to 1 µm and less than or equal to 5 µm, e.g., 1 µm, 2 µm, 3 µm, 4 µm, or 5 µm, etc.

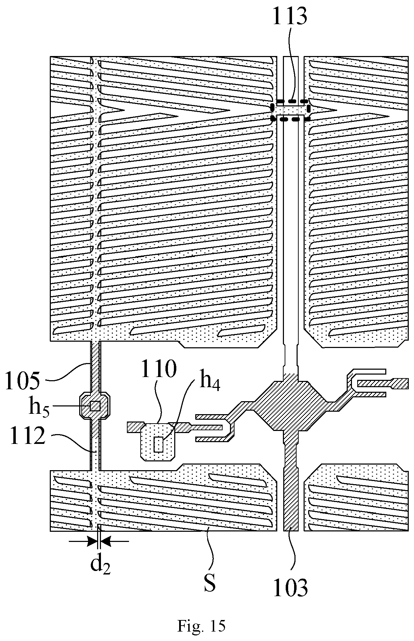

In some embodiments, as for the array substrate provided in the embodiments of the disclosure, as shown in Figs. 3, 14 and 15, each of the common electrodes 108 includes a plurality of slits S. Orthographic projections of the slits S on the base substrate 101 are overlaid with orthographic projections of the common electrode lines 105 on the base substrate 101, the orthographic projections of the first pixel electrodes P₁ on the base substrate 101, and the orthographic projections of the second pixel electrodes P₂ on the base substrate 101 each. Accordingly, the slits S of the common electrodes 108 covers the common electrode lines 103, so as to enhance light efficiency.

It should be understood that since the orthographic projections of the common electrode lines 105 on the base substrate 101 are located in the orthographic projections of the first wires 111 on the base substrate 101, in the case where the orthographic projections of the slits S on the base substrate 101 are overlaid with the orthographic projections of the common electrode lines 105 on the base substrate 101, the orthographic projections of the slits S on the base substrate 101 are also inevitably overlaid with the orthographic projections of the first wires 111 on the base substrate 101.

In some embodiments, as shown in Figs. 3, 12, 14, and 15, the array substrate provided in the embodiments of the disclosure may further include a plurality of second wires 112 penetrating the column gaps within the pixel electrode groups 102. The second wires 112 are integrated with the common electrodes 108, such that the common electrodes 108 overlaid with the pixel electrode groups 102 in the same one column are connected together through the second wires 112. In order to supply common voltages provided from the common electrode lines 105 to the common electrodes 108, the second wires 112 may be coupled to the common electrode lines 105 through fifth via holes h₅ penetrating the passivation layer. Moreover, considering that when the slits S of the common electrodes 108 cover the common electrode lines 105 passing through the column gaps within the pixel electrode groups 102, in the column gap within the pixel electrode groups 102, a line width of the second wire 112 in the same column is less than a line width of the common electrode line 105, in order to improve the light efficiency and guarantee the electrical connection effect of the common electrodes 108 in the same column, the orthographic projection of the common electrode line 105 on the base substrate 101 may be set to be unilaterally beyond an orthographic projection of the second wire 112 on the base substrate 101 by a distance greater than or equal to 0.5 µm and less than or equal to 2 µm, e.g., 0.5 µm, 1 µm, 1.5 µm, or 2 µm, etc.

In some embodiments, as shown in Figs. 3, 12 and 15, the array substrate provided in the embodiments of the disclosure may further include a plurality of jumper lines 113 located at the column gaps between the pixel electrode groups 102. Each of the jumper lines 113 is integrated with the common electrodes 108 that are in the same row and adjacent to the jumper line, such that overall resistance of the common electrodes 108 is reduced, and the uniformity of the common voltage is improved. Moreover, a parasitic capacitor of the common electrodes 108 with reduced resistance to the data lines 103 is reduced, such that the load on the data lines 103 is reduced. Optionally, the jumper line 113 may be arranged at a middle position, two end positions, etc. of the common electrode 108 in the column direction Y as long as electrical connection of common electrodes 108 that are adjacent to each other in the same row can be achieved.

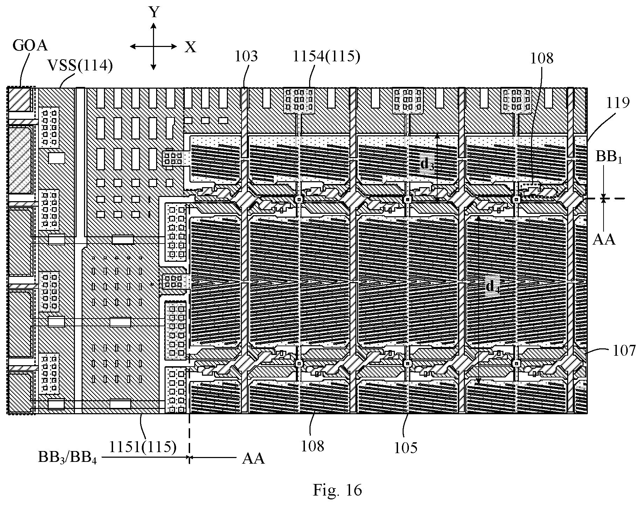

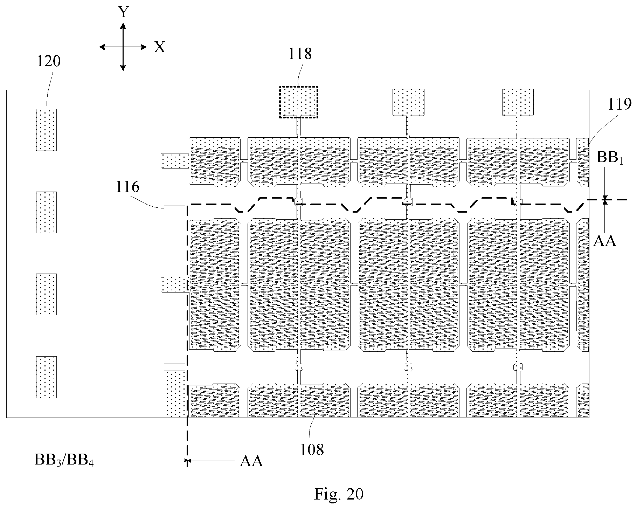

In some embodiments, as for the array substrate provided in the embodiments of the disclosure, as shown in Fig. 2, the array substrate 101 further includes a frame region surrounding the display region AA. The frame region includes a first frame region BB₁ and a second frame region BB₂ that are opposite each other, and a third frame region BB₃ and a fourth frame region BB₄ that are opposite each other. The first frame region BB₁ includes a bonding region configured to bond a circuit board (e.g., integrated circuit, IC), the third frame region BB₃ is connected to the first frame region BB₁ and the second frame region BB₂, and the fourth frame region BB₄ is connected to the first frame region BB₁ and the second frame region BB₂. As can be seen from Figs. 16-20, a gate drive circuit(s) (e.g., gate drive circuit, GOA) is arranged in the third frame region BB₃ and/or the fourth frame region BB₄. The gate drive circuit (e.g., GOA) is connected to the circuit board (e.g., IC) through a gate drive signal line 114. The gate drive signal line 114 and the gate lines 107 are arranged in the same layer and made of the same material. Optionally, the bonding region includes a pad electrically connected to the gate drive signal line 114, and the pad is electrically connected to an edge metal connector of the circuit board (e.g., IC). In the disclosure, the gate drive signal line 114 extending from the pad to the third frame region BB₃ or the fourth frame region BB₄ is arranged in the same layer as the gate lines 107 and made of the same material as the gate line, and no layer change for wiring is required.

In the related art, the gate drive signal line 114 enters the third frame region BB₃ or the fourth frame region BB₄ from the bonding region and then changes from the layer where the gate lines 107 are located to the layer where the data lines 103 are located. The gate drive signal line 114 in the layer where the gate lines 107 are located and the gate drive signal line 114 in the layer where the data lines 103 are located are separately connected to the adapter portion arranged in the same layer as the common electrode 108 and made of the same material as the common electrode by punching. Since the via hole crosses the gate output signal (Gout) for wiring, electronic static discharge (ESD) can easily occur to burn the adapter portion. In some embodiments, annealing of the layer where the adapter portion is located can be added to improve the situation, but can influence throughput. According to the disclosure, the gate drive signal line 114 is only arranged in the layer where the gate lines 107 are located, and no hole for layer replacement is needed, such that the phenomenon that the adapter portion at the via hole is burned by static discharge is avoided, and the reliability life and productivity of the product are improved.

In some embodiments, as for the array substrate provided in the embodiments of the disclosure, the gate drive signal line 114 includes a low level power line (VSS). The low level power line (VSS) is used for reducing noise of at least one of a pull-up node (PU), a pull-down node (PD), a gate signal output end, or a gate signal cascade output end in the gate drive circuit (e.g., GOA). Illustratively, as shown in Figs. 16-20, the low level power line (VSS) is electrically connected to an adapter block 120 (arranged in the same layer as the common electrode 108 and made of the same material as the common electrode) through a tenth via hole h₁₀ penetrating the gate insulating layer and the passivation layer. The adapter block 120 is electrically connected to the pull-up node (PU) or the pull-down node (PD) in the gate drive circuit (e.g., GOA) through a ninth via hole h₉ penetrating the passivation layer.

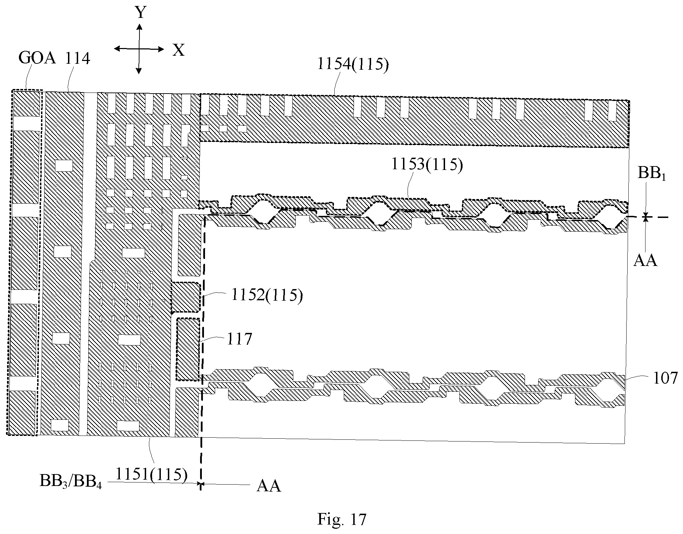

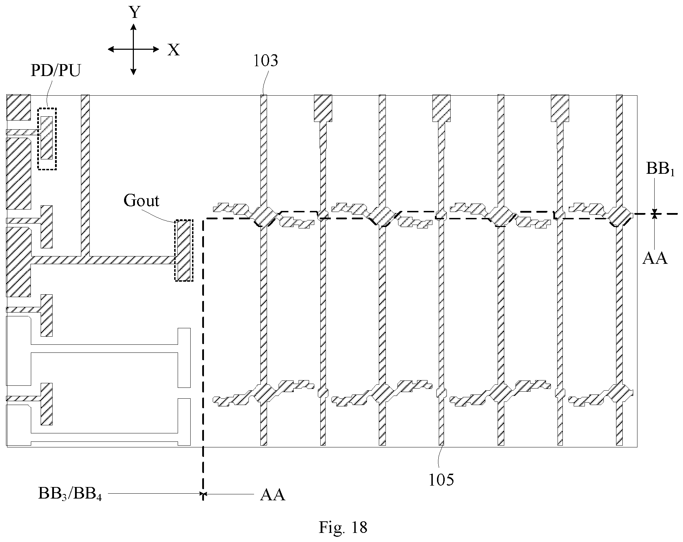

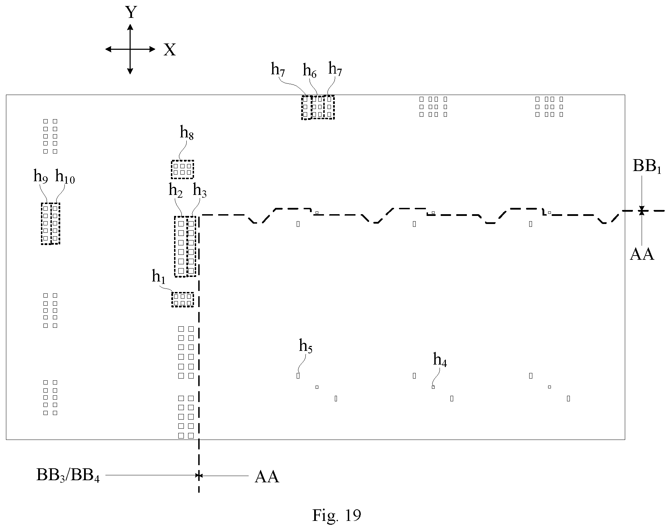

In some embodiments, as shown in Figs. 16-20, the array substrate provided in the embodiments of the disclosure further includes a common electrode bus 115 that at least partially surrounds the display region AA, is in the frame region, and is arranged in the same layer as the gate lines 107 and made of the same material as the gate lines, an adapter structure 116 arranged in the same layer as the common electrodes 108 and made of the same material as the common electrodes, a conductive structure 117 integrated with a gate line 107, and an insulating layer (including a gate insulating layer between a layer where the gate lines 107 are located and a layer where the data lines 103 are located, and a passivation layer between the layer where the data lines 103 are located and a layer where the common electrodes 108 are located) located between a layer where the gate lines 107 are located and a layer where the common electrode 108 is located. The common electrode bus 115 includes a main line 1151 located in the third frame region BB₃ and/or the fourth frame region BB₄, and a convex block 1152 located on a side of the main line 1151 facing the display region AA. The convex block 1152 is correspondingly coupled to the common electrode 108 through a first via hole h₁ penetrating the insulating layer (for example, the gate insulating layer and the passivation layer). The adapter structure 116 is coupled to a gate signal output end (Gout) of the gate drive circuit (e.g., GOA) through a second via hole h₂ penetrating the insulating layer (for example, the passivation layer), and coupled to the conductive structure 117 through a third via hole h₃ penetrating the insulating layer (for example, the gate insulating layer and the passivation layer). The first via hole h₁ is arranged substantially flush with the second via hole h₂ and/or the third via hole h₃ in the column direction Y. It should be noted that in the solution, flushing of the via holes refers to a fluctuation range within 30 µm due to the difference in size and number of the via holes. For example, the first via hole h₁ is shifted within 30 µm (for example, 25 µm, 20 µm, 10 µm, etc.) relative to the second via hole h₂ and/or the third via hole h₃ in the column direction. With reference to Fig. 19, the first via hole h₁ includes three columns of via holes in the column direction, the second via hole h₂ includes one column of via holes in the column direction Y, and the third via hole h₃ includes one column of via holes in the column direction Y. With further reference to Fig. 17, in order to achieve flush arrangement of the via holes in the solution, optionally, at least one side of the conductive structure 117 extending in the column direction Y is flush with at least one side of the convex block 1152 extending in the column direction Y. Optionally, the conductive structure 117 is arranged in the same layer as the gate lines 107 of the display region AA. Optionally, at least one sides of the adapter structures 116 (the adapter structures 116 may be arranged in the same layer as the common electrodes 108) extending in the column direction Y on two sides of the convex block 1152 are flush. In the disclosure, a size of the first via hole h₁ is not consistent with that of the second via hole h₂ and the third via hole h₃, resulting in a slight deviation between the first via hole h₁ from the second via hole h₂ and/or the third via hole h₃ in the column direction Y. During manufacturing, it is guaranteed that the first via hole h₁ is flush with the second via hole h₂ and/or the third via hole h₃ in the column direction Y as much as possible. In this way, a film layer below the polyemid (PI) can be prevented from being broken, a rubbing effect of the polyemid (PI) can be improved, and mura defects due to poor rubbing can be relieved. With reference to Fig. 18, in this solution, the signal output ends (GOut) of the gate drive circuit (e.g., GOA) is electrically connected to the gate lines 107 of the display region AA of the display panel, output ends of some gate drive circuits (e.g., GOA) are not electrically connected to the gate lines 107 of the display region AA, but function as dummy gate drive circuits to transmit start signals or reset signals to the gate drive circuits (e.g., GOA) that supply display signals. Furthermore, in this solution, the gate drive circuits (e.g., GOA) may be arranged in a frame (e.g., the third frame region BB₃ or the fourth frame region BB₄) that is a non-display region, that is, implement unilateral drive, or may be arranged in frames (e.g., the third frame region BB₃ and the fourth frame region BB₄) that are two opposite non-display regions, that is, implement bilateral drive (the gate drive circuits (GOA) arranged on two sides may be connected to the same gate line 107, or may be connected to different gate lines 107, for example, an odd-numbered row of the gate lines 107 are driven by a gate drive circuit (e.g., GOA) on one side, and an even-numbered row of the gate lines 107 are driven by a gate drive circuit (e.g., GOA) on the other side).

In some embodiments, as for the array substrate provided in the embodiments of the disclosure, as shown in Figs. 16-20, the common electrode bus 115 further includes a first branch line 1153 located in the first frame region BB₁, a distance between the first branch line 1153 and a gate line 107 adjacent to the first branch line is substantially equal to a distance between two gate lines 107 in a row gap of two adjacent rows of the pixel electrode groups 102, and the first branch line 1153 has a structure substantially the same as that of the gate lines 107. In other words, an arrangement mode of the first branch line 1153 is the same as that of the two gate lines 107 in the row gap of the two adjacent rows of the pixel electrode groups 102, such that a lateral capacitor of the gate line 107 adjacent to the first branch line 1153 can be guaranteed to be equivalent to a lateral capacitor of each gate line 107 in the row gap of the two adjacent rows of the pixel electrode groups 102, and thus brightness uniformity of each row of the pixel electrode groups 102 is better.

In some embodiments, as for the array substrate provided in the embodiments of the disclosure, as shown in Figs. 16 and 17, the common electrode bus 115 further includes a second branch line 1154 located in the first frame region BB₁, the second branch line 1154 is on a side of the first branch line 1153 away from the display region AA and is spaced from the first branch line 1153. The second branch line 1154 has a first distance d₃ from a gate line 107 nearest to the second branch line. A sum of a width of the row gap of each row of the pixel electrode groups 102 in the column direction Y and a length of each row of the pixel electrode groups 102 in the column direction Y is a second distance d₄. The first distance d₃ is 1/10 to 1/2 of the second distance d₄, e.g., 1/3. In this case, a wiring space in a region where the second branch line 1154 is located can be guaranteed to be larger, such that the second branch line 1154 with a larger width can be arranged to enhance an electrical connection effect between the second branch line 1154 and the common electrode lines 105. Specifically, as shown in Figs. 16-20, the second branch line 1154 may be electrically connected to an adapter pattern 118 (arranged in the same layer as the common electrode 108 and made of the same material as the common electrode) through a sixth via hole h₆ penetrating the gate insulating layer and the passivation layer. The adapter pattern 118 is coupled to the common electrode line 105 through a seventh via hole h₇ penetrating the passivation layer. Optionally, the adapter pattern 118 is integrated with the second wire 112.

In some embodiments, as for the array substrate provided in the embodiments of the disclosure, as shown in Figs. 16-20, in order to improve uniformity of common electrode signals, a dummy common electrode 119 may be arranged at a wider gap between the first branch line 1153 and the second branch line 1154. The dummy common electrode 119 is arranged in the same layer as the common electrodes 108, is made of the same material as the common electrode, and is electrically connected to the common electrode bus 108 through an eighth via hole h₈ penetrating the gate insulating layer and the passivation layer. With reference to Fig. 16, no pixel electrode layer is provided in a region corresponding to the dummy common electrode 119. In this case, the transistor 108 is provided in a portion corresponding to the first branch line 1153, but the transistor 108 corresponding to the first branch line 1153 is not electrically connected to the pixel electrode or the pixel electrode layer in a direction perpendicular to the base substrate 101.

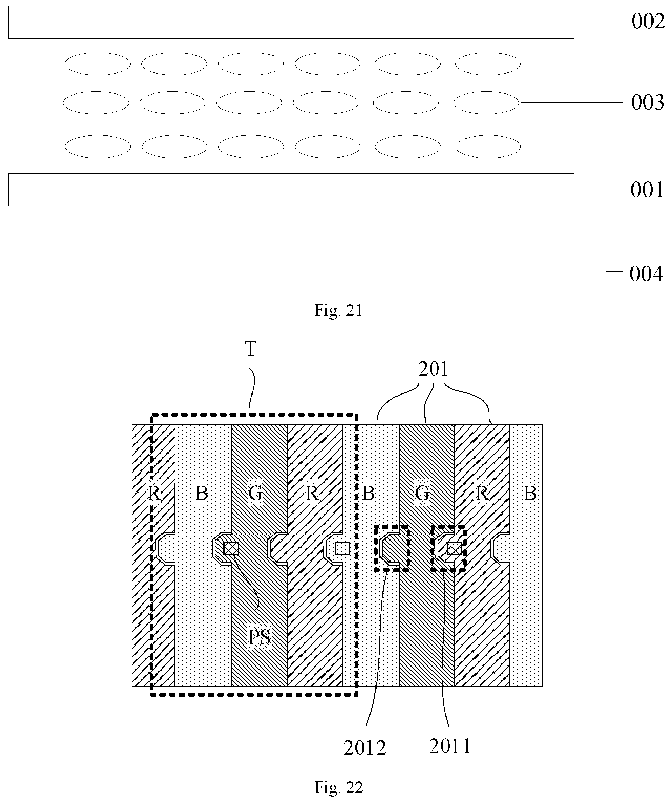

Based on the same invention concept, the embodiments of the disclosure provide a display device. As shown in Fig. 21, the display device includes an array substrate 001 and an opposite substrate 002 that are arranged opposite each other, and a liquid crystal layer 003 located between the array substrate 001 and the opposite substrate 002, where the array substrate 001 is the array substrate provided in the embodiments of the disclosure. Since the principle of solving a problem by the display device is similar to that by the foregoing array substrate, reference may be made to the implementation of the foregoing array substrate for the implementation of the display device, which is not repeated herein.

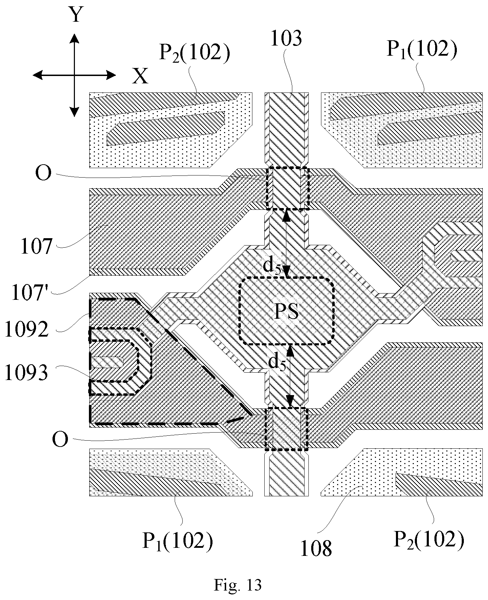

In some embodiments, as for the display device provided in the embodiments of the disclosure, as shown in Fig. 13, an orthographic projection of the data line 103 on the base substrate 101 has an overlaying region O with an orthographic projection of the gate line 107 on the base substrate 101. The inventors found that when a distance d₅ between an orthographic projection of a spacer (PS) of the opposite substrate 002 on the base substrate 101 and the overlaying region O is less than 10 µm, the spacer (PS) cannot recover after deformation. When the distance d₅ between the orthographic projection of the spacer PS of the opposite substrate 002 on the base substrate 101 and the overlaying region O is greater than 20 µm, a pixel aperture ratio is influenced. Therefore, the distance d₅ between the orthographic projection of the spacer (PS) on the base substrate 101 and the overlaying regions O is set to be greater than or equal to 10 µm and less than or equal to 20 µm, for example, 10 µm, 11 µm, 12 µm, 13 µm, 14 µm, 15 µm, 16 µm, 17 µm, 18 µm, 19 µm, or 20 µm, etc. Accordingly, it is guaranteed that after the spacer (PS) deforms, the spacer is blocked by double-layer metal formed by the data line 103 and the gate line 107 in the overlaying region O, such that the spacer (PS) can rebound without influencing the pixel aperture ratio.

In some embodiments, as for the display device provided in the embodiments of the disclosure, as shown in Figs. 22-24, the opposite substrate 002 further includes a plurality of color resists 201, at least some of the color resists 201 include first island structures 2011 corresponding to the widened portions 1031, and each of the first island structures 2011 is spaced from a color resist 201 adjacent to the first island structure. For example, the first island structure 2011 is spaced from the color resist 201 adjacent to the first island structure by a distance of 5 µm. The widened portion 1031 is used for supporting the spacer (PS). By providing the first island structures 2011 corresponding to the widened portions 1031 in the color resists 201 and providing gaps between the first island structures 2011 and the color resists 201 adjacent to the first island structures, it is guaranteed that the situation that the first island structures 2011 have non-uniform heights due to overlaying of the color resists 201 is avoided, such that a support surface of the spacers PS is flat.

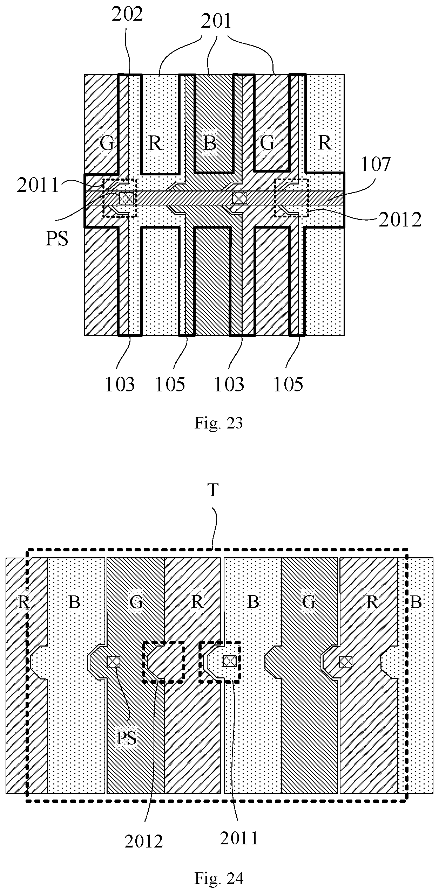

In some embodiments, as for the display device provided in the embodiments of the disclosure, as shown in Figs. 22 and 23, at least some of the color resists 201 include second island structures 2012 overlaid with common electrode lines 105 in orthographic projection, and each of the second island structures 2012 is spaced from a color resist 201 adjacent to the second island structure. For example, the second island structure 2012 is spaced from the color resist 201 adjacent to second island structure by a distance of 5 µm. As can be seen from Fig. 22, by arranging the second island structures 2012, that are spaced from the color resists 201 adjacent to the second island structures, at positions of the common electrode lines 105, morphologies of the red color resist(s) R, the green color resist(s) G and the blue color resist(s) B can be made the same in one period T. Therefore, in actual factory production, the mask can be shifted only according to different alignment marks of the red color resists R, the green color resists G and the blue color resists B without switching the mask, and the red color resists R, the green color resists G and the blue color resists B can be manufactured, a manufacturing time is saved, and development costs are reduced. As can be seen from Fig. 24, in a case that no gap is provided between the second island structure 2012 and the color resist 201 adjacent to the second island structures, and the gap is reserved only between the first island structure 2011 and the color resist 201 adjacent to first island structure, patterns of red color resist(s) R and blue color resist(s) B are consistent in one period T, but are inconsistent with pattern(s) of the green color resist(s) G, such that the mask cannot be shared.

In some embodiments, as for the display device provided in the embodiments of the disclosure, as shown in Figs. 22 and 23, the color resists 201 that are adjacent to each other may be overlaid with each other in a region excluding the first island structure 2011 and the second island structure 2012. Since a black matrix 202 is present in an overlaying region of the color resists 201, optical effects such as transmittance are not influenced even if edges of the color resists 201 are overlaid with each other.

In some embodiments, as shown in Fig. 21, the display device provided in the embodiments of the disclosure may further include a backlight module 004 located at a light incident side of the array substrate 001. The backlight module 004 may be a direct-lit backlight module or an edge-lit backlight module. Optionally, the edge-lit backlight module may include a light bar, reflective sheets that are stacked, a light guide plate, a diffusion sheet, a prism group, etc., and the light bar is located at a side of the light guide plate in a thickness direction. The direct-lit backlight module may include a matrix light source, reflective sheets stacked on a light emergent side of the matrix light source, a diffusion plate, a brightness enhancement film, etc., and the reflective sheets include an opening opposite a position of each lamp bead in the matrix light source. The lamp beads in the light bar and the lamp beads in the matrix light source may be light emitting diodes (LEDs), such as mini LEDs, Micro LEDs, etc.

Submillimeter or micron micro-LEDs belong to self-luminous devices like organic light emitting diodes (OLED). Similar to the organic light emitting diodes, the micro-LEDs have a series of advantages of high brightness, ultra-low delay, and large viewing angles. Since inorganic light emitting diodes emit light based on metal semiconductors with more stable properties and lower resistance, the inorganic light emitting diodes have the advantages of lower power consumption, better temperature resistance, and longer service life than the organic light emitting diodes which emit light based on organic substances. When the micro light emitting diode is used as a backlight source, a more precise dynamic backlight effect can be achieved, the brightness and contrast of a screen can be effectively improved, and a glare phenomenon between bright and dark region of the screen caused by a traditional dynamic backlight can be solved, and visual experience can be optimized.

In some embodiments, the display device provided in the embodiment of the disclosure may be any product or component with a display function, for example, a projector, a 3D printer, a virtual reality apparatus, a mobile phone, a tablet personal computer, a television, a display, a notebook computer, a digital photo frame, a navigator, a smart watch, a fitness wristband, a personal digital assistant, etc. Optionally, the display device provided in the disclosure includes, but is not limited to, a radio frequency unit, a network module, an audio output & input unit, a sensor, a display unit, a user input unit, an interface unit, a control chip and other components. Optionally, the control chip is a central processing unit, a digital signal processor, a system on chip (SoC), etc. For example, the control chip may further include a memory, a power module, etc., and functions of power supply and signal input and output may be implemented through additionally arranged wires, signal lines, etc. For example, the control chip may also include a hardware circuit, a computer-executable code, etc. The hardware circuit may include a conventional very large scale integration (VLSI) circuit or a gate array as well as an existing semiconductor such as a logic chip and a transistor, or other discrete elements. The hardware circuit may also include a field programmable gate array, a programmable array logic, a programmable logic apparatus, etc. Moreover, those skilled in the art can understand that the above structure does not constitute a limitation on the above display device provided in the embodiments of the disclosure. In other words, the above display device provided in the embodiments of the disclosure may include more or less of the above components, or combine some components, or arrange different components.

While the preferred embodiments of the disclosure have been described, those skilled in the art can made various modifications and variations to the embodiments of the disclosure without departing from the spirit and scope of the embodiments of the disclosure. Thus, if modifications and variations to the embodiments of the disclosure fall within the scope of the appended claims of the disclosure and their equivalents, the disclosure is intended to include such modifications and variations as well.

## Claims

1. An array substrate, comprising:
a base substrate, wherein the base substrate comprises a display region;
a plurality of pixel electrode groups arranged in an array in the display region, wherein each of the pixel electrode groups comprises a first pixel electrode and a second pixel electrode, and first pixel electrodes and second pixel electrodes are alternately arranged in a row direction and a column direction separately;
a plurality of data lines passing through column gaps between the pixel electrode groups, wherein the first pixel electrode is coupled to a data line adjacent to the first pixel electrode, and the second pixel electrode is connected to the data line coupled to the first pixel electrode that is in the same one pixel electrode group as the second pixel electrode;
a plurality of connection structures located at row gaps between the pixel electrode groups, wherein the connection structures are connected between the second pixel electrodes and the data lines;
a plurality of common electrode lines passing through column gaps within the pixel electrode groups each, wherein first capacitors are provided between a common electrode line and the connection structures; and
a plurality of compensation structures located at the row gaps between the pixel electrode groups, wherein the compensation structures are coupled to the first pixel electrodes, second capacitors are provided between the compensation structures and a common electrode line, and the second capacitor comprises a structure of three conductive layers overlaid with each other in a direction perpendicular to the base substrate.

2. The array substrate according to claim 1, further comprising a plurality of gate lines on two sides of each row of the pixel electrode groups, wherein the structure of three conductive layers comprises a first conductive structure arranged in the same layer as the pixel electrode groups, a second conductive structure arranged in the same layer as the gate lines, and a third conductive structure arranged in the same layer as the data lines.

3. The array substrate according to claim 2, wherein the common electrode lines comprise convex portions crossing the column direction, and each of the convex portions and each of the compensation structures form a second capacitor.

4. The array substrate according to claim 2, wherein the common electrode lines comprise main portions extending in the column direction, and each of the main portions and each of the compensation structures form a second capacitor.

5. The array substrate according to claim 4, wherein the common electrode lines and the data lines are arranged in the same layer, the array substrate further comprises common electrodes overlaid with the pixel electrode groups in orthographic projection, and the second capacitors further comprise fourth conductive portions arranged in the same layer as the common electrodes.

6. The array substrate according to any one of claims 1-5, further comprising a plurality of transistors located in the row gaps between the pixel electrode groups, wherein the second capacitors further comprise semiconductor structures arranged in the same layer as active layers of the transistors.

7. The array substrate according to any one of claims 1-6, wherein at least one layer of the connection structures and at least one layer of the compensation structures are arranged in the same layer.

8. The array substrate according to any one of claims 1-7, wherein the data lines comprise widened portions, and at least some of the widened portions are configured to support spacers; and
the array substrate further comprises a plurality of transistors located in the row gaps between the pixel electrode groups, and a plurality of gate lines located on two sides of each row of the pixel electrode groups, wherein gates of the transistors are separated at two sides of the data lines, local portions of the gate lines are reused as the gates of the transistors, first electrodes of the transistors are coupled to the widened portions, and orthographic projections of the first electrodes of the transistors on the base substrate are overlaid with orthographic projections of the gates of the transistors on the base substrate.

9. The array substrate according to claim 8, further comprising a plurality of first wires passing through the column gaps within the pixel electrode groups, wherein the first wires are arranged in the same layer as the active layers of the transistors and make contact with the common electrode lines in a stacked manner, orthographic projections of the common electrode lines on the base substrate are located in orthographic projections of the first wires on the base substrate, and a distance between an orthographic projection of a first wire on the base substrate and an orthographic projection of a first pixel electrode adjacent to the first wire on the base substrate and a distance between the orthographic projection of the first wire on the base substrate and an orthographic projection of a second pixel electrode adjacent to the first wire on the base substrate are both greater than or equal to 1 µm and less than or equal to 5 µm.

10. The array substrate according to any one of claims 1-9, further comprising a plurality of gate lines passing through the row gaps between the pixel electrode groups, and common electrodes located in regions defined by the gate lines and the data lines, wherein each of the common electrodes comprises a plurality of slits, and orthographic projections of the slits on the base substrate are overlaid with orthographic projections of the common electrode lines on the base substrate, orthographic projections of the first pixel electrodes on the base substrate, and orthographic projections of the second pixel electrodes on the base substrate each.

11. The array substrate according to claim 10, further comprising a plurality of second wires passing through the column gaps within the pixel electrode groups, wherein the second wires are integrated with the common electrodes, the second wires are coupled to the common electrode lines, and an orthographic projection of a common electrode line on the base substrate is unilaterally beyond an orthographic projection of a second wire on the base substrate by a distance greater than or equal to 0.5 µm and less than or equal to 2 µm.

12. The array substrate according to claim 10 or 11, further comprising a plurality of jumper lines located at the column gaps between the pixel electrode groups, wherein each of the jumper lines is integrated with common electrodes that are in the same row and are adjacent to the jumper line.

13. The array substrate according to any one of claims 1-12, wherein the base substrate further comprises a frame region surrounding the display region, the frame region comprises a first frame region and a second frame region that are opposite each other, and a third frame region and a fourth frame region that are opposite each other, the first frame region comprises a bonding region configured to bond a circuit board, the third frame region is connected to the first frame region and the second frame region, and the fourth frame region is connected to the first frame region and the second frame region; and
the array substrate further comprises a gate drive circuit located in the third frame region and/or the fourth frame region, a plurality of gate lines located on two sides of each row of the pixel electrode groups, and a gate drive signal line connecting the circuit board to the gate drive circuit, wherein the gate drive signal line and the gate lines are arranged in the same layer.

14. The array substrate according to claim 13, wherein the gate drive signal line comprises a low level power line.

15. The array substrate according to claim 13 or 14, further comprising a common electrode bus that at least partially surrounds the display region, is in the frame region and is arranged in the same layer as the gate lines, the common electrodes overlaid with the pixel electrode groups in orthographic projection, an adapter structure arranged in the same layer as the common electrodes, a conductive structure integrated with a gate line, and an insulating layer located between a layer where the gate lines are located and a layer where the common electrodes is located; wherein
the common electrode bus comprises a main line located in the third frame region and/or the fourth frame region, and a convex block located on a side of the main line facing the display region, the convex block is correspondingly coupled to a common electrode through a first via hole penetrating the insulating layer, the adapter structure is coupled to a gate signal output end of the gate drive circuit through a second via hole penetrating the insulating layer, and coupled to the conductive structure through a third via hole penetrating the insulating layer, and the first via hole is arranged substantially flush with the second via hole and/or the third via hole in the column direction.

16. The array substrate according to claim 15, wherein two gate lines are arranged in a row gap of two adjacent rows of the pixel electrode groups, the common electrode bus further comprises a first branch line located in the first frame region, a distance between the first branch line and a gate line adjacent to the first branch line is substantially equal to a distance between the two gate lines in the row gap of the two adjacent rows of the pixel electrode groups, and the first branch line has a structure substantially the same as that of the gate lines.

17. The array substrate according to claim 16, wherein the common electrode bus further comprises a second branch line located in the first frame region, the second branch line is on a side of the first branch line away from the display region and is spaced from the first branch line, the second branch line has a first distance from a gate line nearest to the second branch line, a sum of a width of the row gap of each row of the pixel electrode groups in the column direction and a length of each row of the pixel electrode groups in the column direction is a second distance, and the first distance is 1/10 to 1/2 of the second distance.

18. The array substrate according to claim 17, further comprising a dummy common electrode located between the first branch line and the second branch line, wherein the dummy common electrode is arranged in the same layer as the common electrodes and electrically connected to the common electrode bus.

19. A display device, comprising an array substrate and an opposite substrate that are arranged opposite each other, and a liquid crystal layer located between the array substrate and the opposite substrate, wherein the array substrate is the array substrate according to any one of claims 1-18.

20. The display device according to claim 19, wherein the array substrate comprises a plurality of gate lines on two sides of each row of pixel electrode groups, and orthographic projections of data lines on the base substrate have overlaying regions with orthographic projections of the gate lines on the base substrate; and
the opposite substrate comprises a plurality of spacers, orthographic projections of the spacers on the base substrate are located within orthographic projections of widened portions on the base substrate, and a distance between the orthographic projections of the spacers on the base substrate and the overlaying regions is greater than or equal to 10 µm and less than or equal to 20 µm.

21. The display device according to claim 19 or 20, wherein the opposite substrate further comprises a plurality of color resists, at least some of the color resists comprise first island structures corresponding to the widened portions, and each of the first island structures is spaced from a color resist adjacent to the first island structure.

22. The display device according to claim 21, wherein at least some of the color resists comprise second island structures overlaid with common electrode lines in orthographic projection, and each of the second island structures is spaced from a color resist adjacent to the second island structure.

23. The display device according to claim 22, wherein the color resists that are adjacent to each other are overlaid with each other in a region excluding the first island structure and the second island structure.
